# EUROPEAN PATENT SPECIFICATION

(11) **EP 2 922 267 B1**
(45) Date of publication and mention of the grant of the patent: **30.05.2018**
(21) Application number: 14788197.3
(22) Date of filing: 21.04.2014
(51) Int. Cl.: H04L 29/06, H04L 29/08, H04L 12/64

(54) **METHOD FOR ACHIEVING COMMUNICATION BASED ON MBIM INTERFACE AND DEVICE THEREFOR**
VERFAHREN ZUR KOMMUNIKATIONSHERSTELLUNG AUF DER BASIS EINER MBIM-SCHNITTSTELLE UND VORRICHTUNG DAFÜR
PROCÉDÉ PERMETTANT D'OBTENIR UNE COMMUNICATION BASÉE SUR UNE INTERFACE MBIM ET DISPOSITIF ASSOCIÉ

(30) Priority: 27.04.2013 CN 201310152616
(43) Date of publication of application: 23.09.2015
(73) Proprietor: Huawei Device Co., Ltd., Longgang District Shenzhen Guangdong 518129 (CN)
(72) Inventor: CHEN, Bo, Shenzhen Guangdong 518129 (CN)
(74) Representative: Epping - Hermann - Fischer
(86) International application number: PCT/CN2014/075808
(87) International publication number: WO 2014/173268

(56) References cited:
- CN-A- 102 130 957
- CN-A- 102 158 350
- CN-A- 102 201 953
- CN-A- 102 769 612
- CN-A- 102 869 125
- US-A- 5 644 594
- Aleksander: "An introduction to libmbim", SIGQUIT, 6 February 2013 (2013-02-06), XP055225851, Retrieved from the Internet: URL:https://web.archive.org/web/2013050500 0421/http://sigquit.wordpress.com/2013/02/ 06/an-introduction-to-libmbim [retrieved on 2015-11-04]
- "Universal Serial Bus Communications Class Subclass Specification for Mobile Broadband Interface Model", , 14 November 2011 (2011-11-14), XP055223611, Retrieved from the Internet: URL:http://caxapa.ru/thumbs/334029/MBIM_v1 _0_USBIF_FINAL.pdf [retrieved on 2015-10-26]
- Bjørn Mork: "[PATCH net-next 14/14] net: cdc_mbim: Device Service Stream support", , 18 October 2012 (2012-10-18), XP055225845, Retrieved from the Internet: URL:http://permalink.gmane.org/gmane.linux .network/246274 [retrieved on 2015-11-04]

## Description

### TECHNICAL FIELD

The present invention relates to the field of communications technologies, and in particular, to a method and device for implementing communication based on an MBIM interface.

### BACKGROUND

With continuous popularization of various portable devices and continuous development of communications technologies, a variety of data communication modes are emerging to fit with the portable devices. While portable devices are finding use in daily life, various mobile broadband (Mobile Broadband, MBB for short) devices are used to serve different purposes. A current MBB device communicates with a host based on an interface. After being connected to a PC host, the MBB device may be reported as various network adapter interfaces, such as a Modem, an Ecm, and an Ndis, and a user may access a wireless network through these interfaces, to surf the Internet. Before a conventional MBB device is used, a vendor-specific driver and application program need to be installed. After the driver and the application program are installed, the MBB device is switched from an installation mode to a working mode, to provide a data service, a voice service, a short message service message, and the like.

The Microsoft has released the latest edition of Windows 8 operating system. Different from previous Windows versions, Windows 8 further includes a brand new edition Windows RT version, which is capable of supporting an Arm kernel, in addition to the traditional X64/X86 edition. When the Arm kernel is in use, a driver of an existing interface goes out of operation, and an upper-layer application program in the PC host cannot send or receive data to or from the MBB device. So far, a need exists for empowering the MBB device to exchange data with a device running the Windows 8 operating system.

Aleksander, "An introduction to libmbim", SIGQUIT, URL:https://web.archive.org/web/20130505000421/http://sigquit.wordpress.com/2013/02/06/an-introduction-to-libmbim, discloses that a Basic Connect service is mandatory in every MBIM device; others are optional. Vendors or even Network Operators can also extend the functionality of the device with other services, for example to support other protocols embedded within MBIM (e.g. QMI or AT within MBIM); or just to provide specific new features.

"Universal Serial Bus Communications Class Subclass Specification for Mobile Broadband Interface Model", URL:http://caxapa.ru/thumbs/334029/MBIM_v1_0_USBIF_FINAL.pdf, discloses in the chapter MBIM SERVICE AND CID EXTENSIBILIT that this specification targets only the basis functionality for a connectivity service, but the services and CIDs can easily be extended by creating a new MBIM service and matching UUID, and then registering them at the MBIM Registry (MBIMRegistry).

Bjorn Mork "[PATCH net-next 14/14] net: cdc_mbim: Device Service Stream support", URL:http://permalink.gmane.org/gmane.linux.network/246274, discloses to send AT commands via a mapped MBIM interface.

### SUMMARY

Embodiments of the present invention provide a method and device as defined in the independent claims for implementing communication based on an MBIM interface, so that a host exchanges information of an extended service with an MBB device.

### BRIEF DESCRIPTION OF DRAWINGS

To describe the technical solutions in the embodiments of the present invention more clearly, the following briefly introduces the accompanying drawings required for describing the embodiments of the present invention. Apparently, the accompanying drawings in the following description show merely some embodiments of the present invention, and a person of ordinary skill in the art may still derive other drawings from these accompanying drawings without creative efforts.
FIG. 1 is a schematic structural diagram of a system for implementing communication based on an MBIM interface according to an embodiment of the present invention;
FIG. 2 is a schematic diagram of interaction within a system for implementing communication based on an MBIM interface according to an embodiment of the present invention;
FIG. 3 is a schematic diagram of information exchange in which an AT command is sent and received based on an MBIM interface according to an embodiment of the present invention;
FIG. 4 is a schematic diagram of system information exchange in which an AT command is sent and received based on an MBIM interface according to another embodiment of the present invention;
FIG. 5 is a schematic diagram of system information exchange in which a firmware update is implemented based on an MBIM interface according to an embodiment of the present invention;
FIG. 6 is a schematic diagram of system information exchange in which a device state is output based on an MBIM interface according to an embodiment of the present invention;
FIG. 7 is a flowchart illustrating, from the perspective of an MBB device, a method for implementing communication based on an MBIM interface according to an embodiment of the present invention;
FIG. 8 is a flowchart illustrating, from the perspective of an MBB device, a method for sending and receiving an AT command based on an MBIM interface according to an embodiment of the present invention;
FIG. 9 is a flowchart illustrating, from the perspective of an MBB device, a method for sending and receiving an AT command based on an MBIM interface according to another embodiment of the present invention;
FIG. 10 is a flowchart illustrating, from the perspective of an MBB device, a method for implementing a firmware update based on an MBIM interface according to an embodiment of the present invention;
FIG. 11 is a flowchart illustrating, from the perspective of an MBB device, a method for outputting MBB device state based on an MBIM interface according to an embodiment of the present invention;
FIG. 12 is a flowchart illustrating, from the perspective of a host, a method for implementing communication based on an MBIM interface according to an embodiment of the present invention;
FIG. 13 is a flowchart illustrating, from the perspective of a host, a method for sending and receiving an AT command based on an MBIM interface according to an embodiment of the present invention;
FIG. 14 is a flowchart illustrating, from the perspective of a host, a method for sending and receiving an AT command based on an MBIM interface according to another embodiment of the present invention;
FIG. 15 is a flowchart illustrating, from the perspective of a host, a method for implementing a firmware update based on an MBIM interface according to an embodiment of the present invention;
FIG. 16 is a flowchart illustrating, from the perspective of a host, a method for outputting MBB device state based on an MBIM interface according to an embodiment of the present invention;
FIG. 17 is a schematic diagram depicting a framework of a mobile broadband MBB device for implementing communication based on an MBIM interface according to an embodiment of the present invention;
FIG. 18 is a schematic diagram depicting a framework of a host for implementing communication based on an MBIM interface according to an embodiment of the present invention;
FIG. 19 is a schematic structural diagram of an MBB device for implementing communication based on an MBIM interface according to an embodiment of the present invention; and
FIG. 20 is a schematic structural diagram of a host for implementing communication based on an MBIM interface according to an embodiment of the present invention.

### DESCRIPTION OF EMBODIMENTS

The following clearly and completely describes the technical solutions in the embodiments of the present invention with reference to the accompanying drawings in the embodiments of the present invention. Apparently, the described embodiments are some rather than all of the embodiments of the present invention.

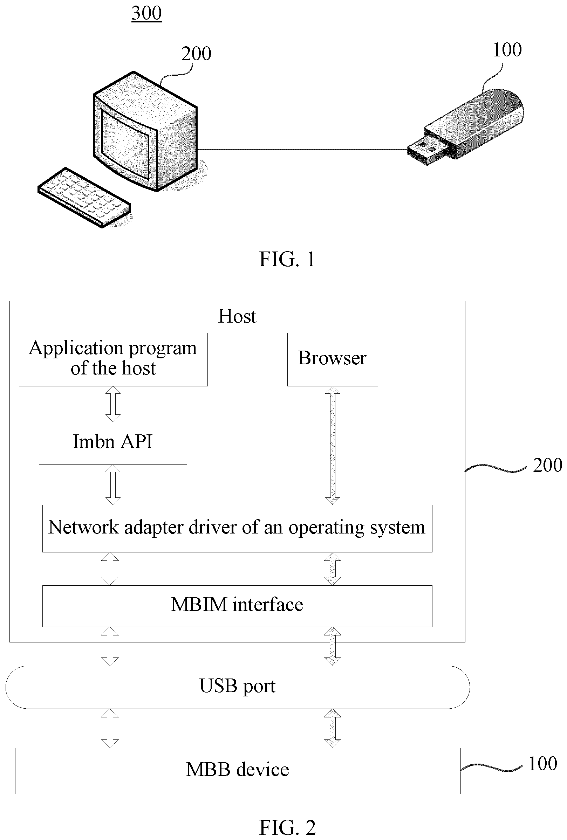

FIG. 1 is a schematic structural diagram of a system for implementing communication based on an MBIM interface according to an embodiment of the present invention. The system 300 may be a system in which a mobile broadband (Mobile Broadband, MBB for short) device 100 exchanges information with a host 200. The host 200 may be a communications device such as a personal computer device, a mobile phone, a PAD (Portable Device, portable device), a wearable device (iwatch), or a server, and the MBB device 100 may be a data card or the like. Information exchange between the MBB device 100 and the host 200 is used as an example to describe the system 300 in this embodiment of the present invention. The MBB device 100 is connected to the host 200 through a universal serial bus USB interface, so that the MBB device 100 communicates with the host 200.

In this embodiment, the host is installed with an operating system supporting the MBIM (Mobile Broadband Interface Model, MBIM for short) Protocol, for example, the Windows 8 operating system. The system, the method, and the device in the embodiments of the present invention are described by using an example in which the host 200 has the Windows 8 operating system installed. However, the embodiments of the present invention are not limited to the host that runs the Windows 8 operating system, and any operating system supporting the MBIM Protocol is applicable to the embodiments of the present invention.

The MBB device involved in the embodiments of the present invention refers to a device that performs communication by using the MBIM Protocol. The MBIM Protocol is a device interface specification of a network adapter. Data in a data format specified by the MBIM Protocol may be communicated between the MBB device using the MBIM Protocol and the host through a USB interface path, where the USB interface path may include a control path and a data path that support the MBIM Protocol, the control path generally transmits a command identifier (Command Identifier, CID for short) packet between the host and the MBB device, and the data path generally transmits a packet in Device Service Stream (Device Service Stream, DSS for short) format or in device service stream (device service stream, dss for short) format between the host and the MBB device. A device service stream packet may generally start with a DSS identifier or a dss identifier, may carry user-defined data of a non-standard class, and is sent through the data path of the USB interface. In the embodiments of the present invention, by way of example, data transmitted between the host and the MBB device through the data path of the USB interface is the DSS format, but the protection scope of this embodiment of the present invention is not limited thereto. It can be understood that, the format of the data transmitted between the host and the MBB device through the data path of the USB interface may also be the dss format.

When the MBB device 100 is connected to the host 200, for example, the MBB device 100 is inserted into a USB interface of the host 200, the host 200 sends a USB descriptor request to the MBB device 100. The MBB device 100 reports, to the host 200 according to the USB descriptor request, descriptor information of a device, an interface, and an endpoint that correspond to the MBB device 100, and indicates to the host 200 that the MBB device 100 supports the MBIM Protocol. The host 200 maps, according to the descriptor information reported by the MBB device 100, the MBB device to an MBIM interface matching the descriptor information, and implements automatic identification and exchanges information with the MBB device through the MBIM interface.

FIG. 2 is a schematic diagram of interaction within a system for implementing communication based on an MBIM interface according to an embodiment of the present invention.

Step 10: The host 200 sends a service query request message to the MBB device 100 through the mapped MBIM interface.

For example, the host 200 may send a service query request message whose name is "MBIM_CID_DEVICE_SERVICES" to the MBB device 100 through a control path of the MBIM interface, so as to query for an extended service class supported by the MBB device 100, or query for an extended service class supported by the MBB device 100 and a function value corresponding to the extended service class.

It can be understood that, a format of the service query request message may be command identifier (Command Identifier, CID for short) format. A user uses a user interface UI of an operating system on the host to perform a related setting for the MBB device. According to a user operation, an application program of the host invokes a mobile broadband network interface function (Interface Mobile Broadband Network, IMbn for short) API of the operating system, and the MBIM interface sends an instruction or data to the MBB device 100. The host further includes a network adapter driver of the operating system, and communication between the MBIM interface and the application program of the host is implemented by using the network adapter driver.

Optionally, the host 200 may also send the service query request message to the MBB device 100 through a data path of the MBIM interface, where a format of the service query request message may be DSS format.

Step 20: The MBB device 100 receives the service query request message that is sent by the host through the mapped MBIM interface.

In this embodiment, the MBB device 100 may receive, through the control path of the MBB device 100, the service query request message in CID format sent by the host.

Optionally, the MBB device 100 may also receive, through the data path of the MBB device 100, the service query request message in DSS format sent by the host.

Step 30: The MBB device 100 parses the service query request message to acquire a service query request.

In this embodiment, the MBB device 100 parses the service query request message in CID format to acquire the service query request, where content of the query request may include querying for an extended service class supported by the MBB device 100, and may also include querying for an extended service class supported by the MBB device 100 or a standard service class and a function value corresponding to the service class.

Step 40: The MBB device 100 reports, according to the service query request, an extended service class supported by the MBB device 100 to the host 200, so that the host 200 exchanges information of an extended service with the MBB device 100 through the MBIM interface, where the extended service class includes at least one of the following: sending and receiving an AT command Vendor AT, a firmware update Firmware Update, or outputting the MBB device state Log Output.

In the system for implementing communication based on an MBIM interface in this embodiment of the present invention, an extended service class supported by the MBB device is reported to the host, so that the host exchanges information of an extended service with the MBB device through the mapped MBIM interface. This helps accomplish subsequent exchange of data of the extended service between the host and the MBB device.

By way of example, the MBB device 100 reports the extended service class to the host 200 through the control path of the MBB device 100. There is no limitation on whether the control path of the MBB device 100 or the data path of the MBB device 100 is in use.

The reporting, by the MBB device 100 according to the service query request, an extended service class supported by the MBB device to the host includes:
reporting, by the MBB device 100 through the control path of the MBB device according to the service query request, a universally unique identifier (universally unique identifier, UUID for short) of the extended service class supported by the MBB device to the host, so that the host identifies the extended service class supported by the MBB device.

Optionally, the MBB device 100 may further report, through the control path of the MBB device 100 according to the service query request, a UUID of the extended service class supported by the MBB device 100 and a UUID of a standard service class to the host 200, so that the host 200 identifies the extended service class supported by the MBB device 100 and the standard service class. The standard service class may be a function, such as a short message service, a phone book, SIM card authentication management, or joining/disconnecting from network.

Optionally, the MBB device 100 may further report, through the control path of the MBB device 100 according to the service query request, a UUID of the extended service class supported by the MBB device 100 and a function value corresponding to the extended service class to the host 200.

Optionally, the MBB device 100 may further report, through the control path of the MBB device 100 according to the service query request, a UUID of the extended service class supported by the MBB device 100, a UUID of a standard service class, and a function value corresponding to the extended service class to the host 200.

It can be understood that, one or more extended service classes may be reported by the MBB device 100 to the host 200 through the control path, which is not limited in this embodiment of the present invention.

In this embodiment of the present invention, the UUID of the extended service class, the UUID of the standard service class, and/or the function value corresponding to the extended service class may be preset on the MBB device 100 by a device manufacturer or an operator before factory shipment or sale.

For example, when the extended service class is to send and receive an AT command, the MBB device 100 defines a name "Vendor AT" for the extended service class of sending and receiving an AT command, may define a UUID UUID_VENDOR_AT for the extended service class of sending and receiving an AT command, and defines a function value of "MBIM_CID_VENDOR_AT" to represent an actual function of the "Vendor AT".

When the extended service class is firmware update, the MBB device 100 defines a name "Firmware Update" for the extended service class of firmware update, and may define a UUID UUID_FIRMWARE_UPDATE for the firmware update.

When the extended service class is to output MBB device state, the MBB device 100 defines a name "Log Output" for the extended service class of outputting MBB device state, and may define a UUID that is UUID_LOG_OUTPUT for the MBB device state outputting.

Further or optionally, a service function module corresponding to the extended service class may further be added to the MBB device 100, to perform an extended service function corresponding to the extended service class, where the service function module is integrated into the MBB device 100. It can be understood that, the service function module corresponding to the extended service class may also be a communications device independent of the MBB device 100, and the independent communications device corresponding to the service function module may exchange information with the MBB device 100.

The service function module may include an AT command processing module, a firmware update module, an MBB device state output module, and the like. A type and a function of the service function module are not limited in this embodiment of the present invention, and are customized according to a requirement of an operator or a manufacturer.

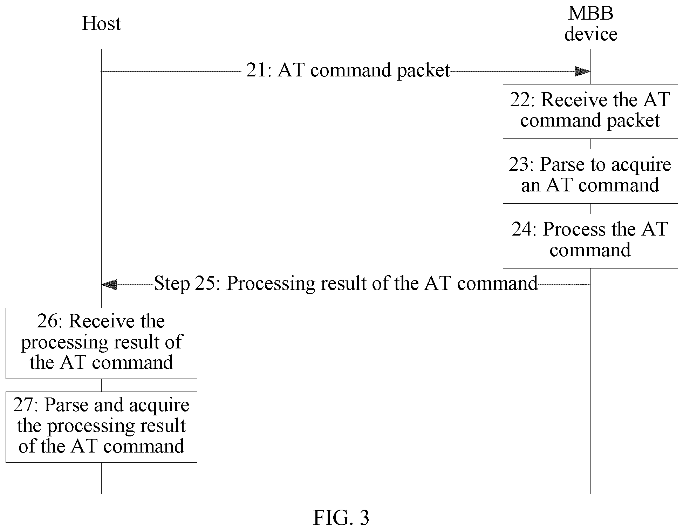

FIG. 3 is a schematic diagram of information exchange in which an AT command is sent and received based on an MBIM interface according to an embodiment of the present invention.

Optionally, when the extended service class includes sending and receiving an AT command, the reporting, by the MBB device 100 according to the service query request, an extended service class supported by the MBB device to the host, so that the host 200 exchanges information of an extended service with the MBB device 100 includes:
Step 21: If the host 200 determines that the extended service class is to send and receive an AT command, the host 200 sends a CID packet carrying the AT command to the MBB device 100 through a control path of the MBIM interface.

For example, an application program of the host 200 invokes a mobile broadband network interface function IMbn API, and enables a service of sending and receiving an AT command, and the application program is a set of control instructions corresponding to the extended service class. Further, the application program invokes the IMbn API, and sends a character string of the AT command to the MBIM interface.

Further, an interface adapter driver of the MBIM interface may encapsulate the character string of the AT command into a CID packet carrying the AT command, and send the CID packet to the MBB device 100.

The CID packet carrying the AT command may be in the following format:

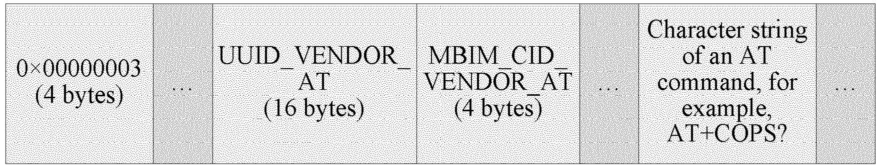

Step 22: The MBB device 100 receives, through the control path of the MBB device, the CID packet carrying the AT command sent by the host 200.

Step 23: The MBB device 100 parses the CID packet carrying the AT command to acquire the AT command.

Step 24: The MBB device 100 further processes the AT command, and generates a processing result of the AT command.

Step 25: The MBB device 100 may return a CID packet carrying the processing result of the AT command to the host 200 through the control path of the MBB device 100.

The CID packet, returned by the MBB device 100, that carries the AT command may be in the following format:

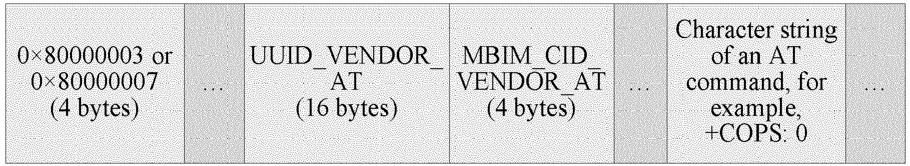

Step 26: The host 200 receives, through the control path of the MBIM interface, the CID packet carrying the processing result of the AT command reported by the MBB device 100.

Step 27: The host 200 parses the CID packet carrying the processing result of the AT command to acquire the processing result of the AT command.

For example, the MBIM interface of the host 200 parses the CID packet carrying the processing result of the AT command to acquire the processing result of the AT command, and the MBIM interface sends the processing result of the AT command to the application program through the IMbn API. At this point, processing of the AT command is completed.

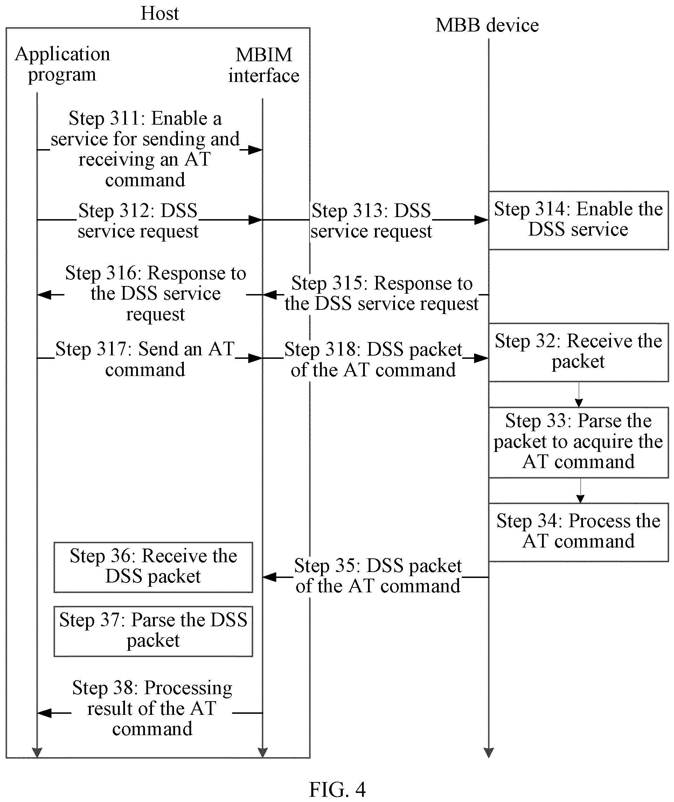

FIG. 4 is a schematic diagram of system information exchange in which an AT command is sent and received based on an MBIM interface according to another embodiment of the present invention.

Optionally, when the extended service class includes sending and receiving an AT command, the reporting, by the MBB device 100 according to the service query request, an extended service class supported by the MBB device to the host, so that the host 200 exchanges information of an extended service with the MBB device 100 may include:
Step 31: The host 200 determines that the extended service class is to send and receive an AT command, and sends an AT command packet in DSS format to the MBB device 100 through a data path of the MBIM interface.

Specifically, step 31 includes:
Step 311: An application program of the host 200 invokes the IMbn API according to the extended service class, and enables a service of sending and receiving an AT command.
Step 312: The application program invokes the IMbn API to send a request message for enabling a Device Service Stream DSS service, namely, MBIM_CID_DSS_CONNECT, to the MBIM interface.
Step 313: The host 200 sends, to the MBB device 100 through a control path of the MBIM interface, the request message for enabling the DSS service of sending and receiving an AT command.
Step 314: The MBB device 100 receives, through the control path of the MBB device 100, the request message for enabling the DSS service sent by the host 200.
Step 315: The MBB device 100 enables the DSS service, and returns, to the host 200 through the control path of the MBB device, a response message for enabling the DSS service.
Step 316: The host 200 receives the response message for the DSS service through the control path of the MBIM interface, and the MBIM interface sends the response message to the application program through the IMbn API.
Step 317: The application program invokes the IMbn API, and sends a character string of the AT command to the MBIM interface.
Step 318: An interface adapter driver of the MBIM interface encapsulates the character string of the AT command into a DSS packet, and sends the DSS packet to the MBB device 100 through the data path of the MBIM interface.

Step 32: The MBB device 100 receives, through the data path of the MBB device, the DSS packet carrying the AT command sent by the host, where a format of the DSS packet carrying the AT command is DSS format.

Step 33: The MBB device 100 parses the DSS packet carrying the AT command to acquire the AT command.

Step 34: The MBB device 100 processes the AT command, and generates a processing result of the AT command.

Step 35: The MBB device 100 encapsulates the processing result of the AT command into a DSS packet, and returns the DSS packet carrying the processing result of the AT command to the host 200 through the data path of the MBB device 100.

Step 36: The MBIM interface of the host 200 receives, through the data path of the host 200, the DSS packet carrying the processing result of the AT command returned by the MBB device 100.

Step 37: The MBIM interface parses the DSS packet carrying the processing result of the AT command to acquire the processing result of the AT command.

Step 38: The MBIM interface sends the processing result of the AT command to the application program through the IMbn API. At this point, processing of the AT command is completed.

When the host 200 and the MBB device 100 send data of the AT command through the data path, the DSS packet carrying the AT command may be in the following standard formats:

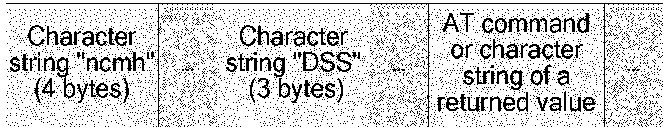

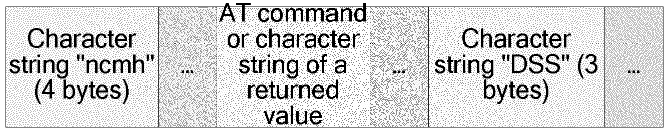

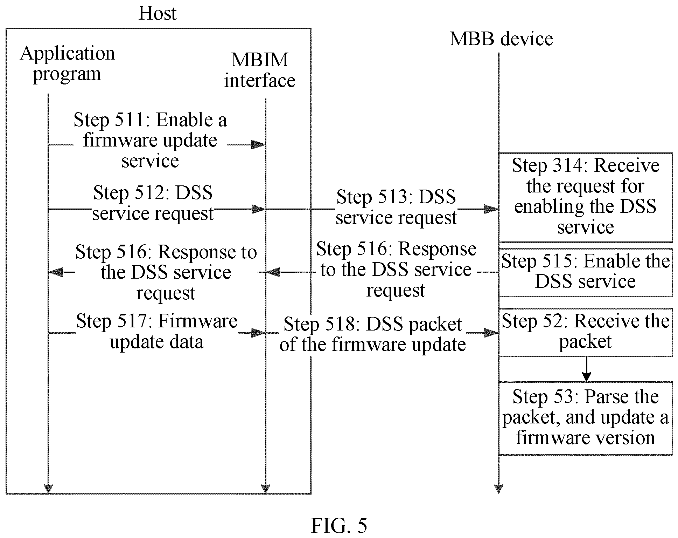

FIG. 5 is a schematic diagram of system information exchange in which a firmware update is implemented based on an MBIM interface according to an embodiment of the present invention.

Optionally, when the extended service class includes firmware update, the reporting, according to the service query request, an extended service class supported by the MBB device to the host, so that the host exchanges information of an extended service with the MBB device through the MBIM interface includes:
Step 51: The host 200 determines that the extended service class is firmware update, the host 200 sends a firmware update packet in DSS format to the MBB device 100 through a data path of the MBIM interface.

Specifically, step 51 includes:
Step 511: An application program of the host 200 invokes the IMbn API according to the extended service class, and enables a firmware update service.

The application program may be provided by the MBB device, may be an installation program obtained from a service provider, or may be a default program of the host.

Step 512: The application program invokes the IMbn API to send a request message for enabling a Device Service Stream DSS service, namely, MBIM_CID_DSS CONNECT, to the MBIM interface.

Step 513: The MBIM interface sends the request message for enabling the DSS service of the firmware update to the MBB device 100 through a control path of the MBIM interface.

Step 514: The MBB device 100 receives, through the control path of the MBB device 100, the request message for enabling the DSS service of the firmware update sent by the host 200.

Step 515: The MBB device 100 enables the DSS service of the firmware update, and returns, through the control path of the MBB device 100, a response message for enabling the DSS service of the firmware update to the host 200.

Step 516: The host 200 receives the response message for the DSS service of the firmware update through the control path of the MBIM interface, and sends the response message to the application program through the IMbn API.

Step 517: The application program invokes the IMbn API, and sends firmware update data to the MBIM interface.

Step 518: An interface adapter driver of the MBIM interface encapsulates the firmware update data into a packet in DSS format, and sends the packet to the MBB device 100 through the data path of the MBIM interface.

When the host 200 sends the firmware update data through the data path of the MBIM interface, the DSS packet carrying the firmware update data may be in the following standard formats:

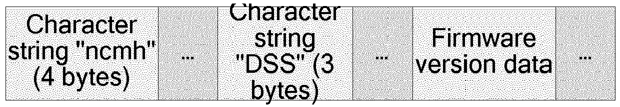

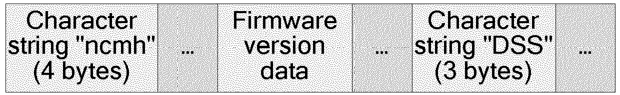

Step 52: The MBB device 100 receives, through the data path of the MBB device, the firmware update DSS packet sent by the host.

Step 53: The MBB device 100 parses the firmware update DSS packet to acquire the firmware update data, and updates a firmware version of the MBB device 100.

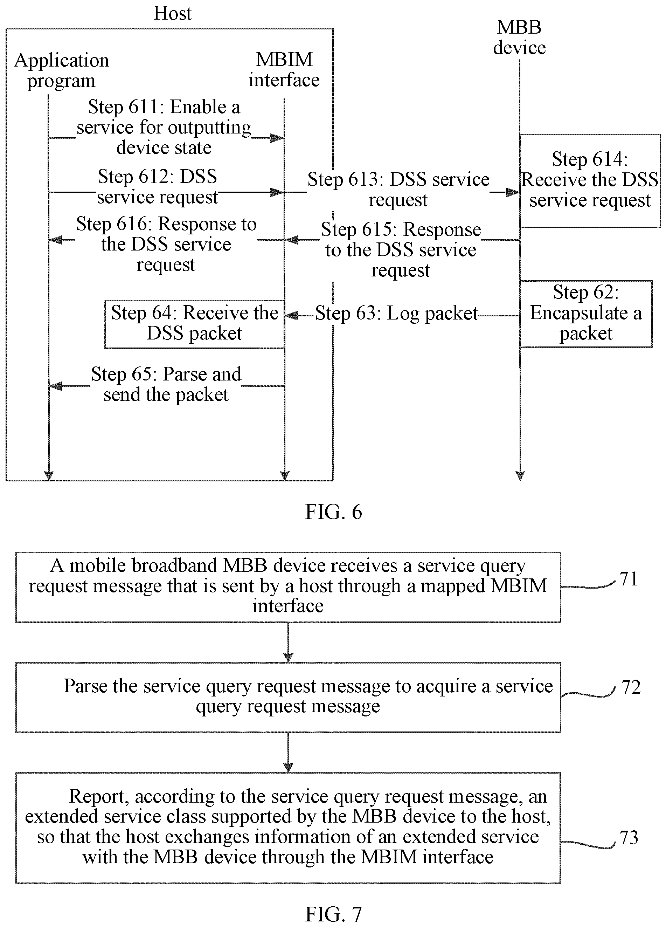

FIG. 6 is a schematic diagram of system information exchange in which a device state is output based on an MBIM interface according to an embodiment of the present invention.

Step 61: The host 200 determines that the extended service class is to output MBB device state, the host 200 sends, to the MBB device 100 through a control path of the MBIM interface, a service request for outputting the MBB device state.

Step 61 includes:
Step 611: An application program of the host 200 invokes an IMbn API according to the extended service class, and enables a service for outputting the MBB device state.
Step 612: The application program invokes the application program interface IMbn API to send, to the MBIM interface, a request message for enabling a DSS service of outputting the MBB device state.
Step 613: The host 200 sends, to the MBB device 100 through the control path of the MBIM interface, the request message for enabling the DSS service of outputting the MBB device state.
Step 614: The MBB device 100 receives, through the control path of the MBB device 100, the request for enabling the DSS service of outputting the MBB device state sent by the host 200.
Step 615: The MBB device 100 enables the DSS service of outputting the MBB device state, and returns, to the host 200 through the control path of the MBB device, a response message for enabling the DSS service of outputting the MBB device state.
Step 616: The host 200 receives, through the control path of the MBIM interface, the response message for the DSS service of outputting the MBB device state, where the MBIM interface sends the response message to the application program through the IMbn API.

Step 62: The MBB device 100 encapsulates Log data indicating the MBB device state into a DSS packet.

Step 63: The MBB device 100 returns the DSS packet carrying the Log data to the host 200 through a data path of the MBB device 100.

Step 64: The host 200 receives the DSS packet carrying the Log data through the data path of the MBIM interface.

Step 65: The host 200 parses the DSS packet carrying the Log data to acquire the Log data, and sends the Log data to the application program through the IMbn API.

The DSS packet carrying the Log data exchanged by the MBB device 100 with the host 200 may be in the following formats:

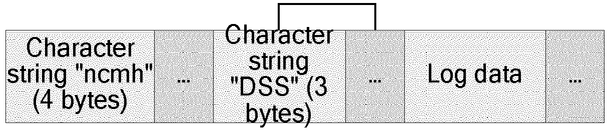

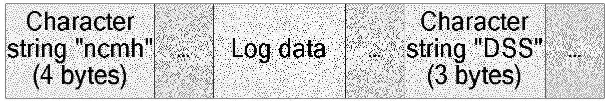

It can be understood that, the MBB device 100 in this embodiment of the present invention may send a small amount of service data, for example, an AT command through the control path of the MBB device, and may send a large amount of service data, for example, firmware update data, through the data path of the MBB device, so as to improve transmission efficiency of the MBB device 100.

In the system for implementing communication based on an MBIM interface in this embodiment of the present invention, an extended service class supported by the MBB device is reported to the host, so that the host exchanges information of an extended service with the MBB device through the mapped MBIM interface. This helps accomplish subsequent exchange of data of the extended service between the host and the MBB device.

FIG. 7 is a flowchart illustrating, from the perspective of an MBB device, a method for implementing communication based on an MBIM interface according to an embodiment of the present invention.

71: A mobile broadband MBB device receives a service query request message that is sent by a host through a mapped MBIM interface.

72: Parse the service query request message to acquire the service query request.

73: Report, according to the service query request, an extended service class supported by the MBB device to the host, so that the host exchanges information of an extended service with the MBB device through the MBIM interface, where the extended service class includes at least one of sending and receiving an AT command, firmware update, or outputting MBB device state.

The MBB device for implementing communication based on the MBIM interface in this embodiment of the present invention reports the extended service class supported by the MBB device to the host, so that the host exchanges information of the extended service with the MBB device through the mapped MBIM interface. This helps accomplish subsequent exchange of data of the extended service between the host and the MBB device.

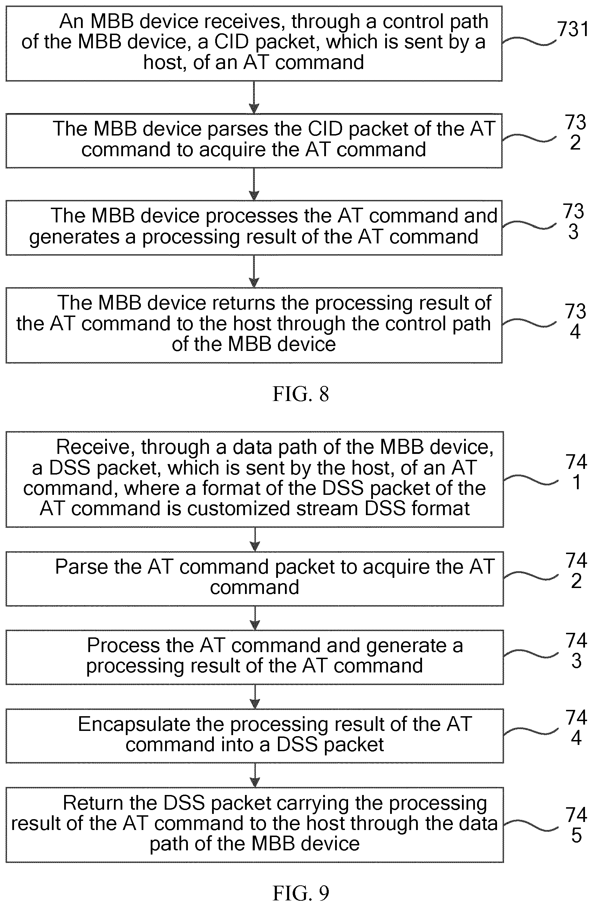

FIG. 8 is a flowchart illustrating, from the perspective of an MBB device, a method for sending and receiving an AT command based on an MBIM interface according to an embodiment of the present invention.

When the extended service class includes sending and receiving an AT command, the reporting, by the MBB device 100 according to the service query request, an extended service class supported by the MBB device 100 to the host, so that the host 200 exchanges information of an extended service with the MBB device 100 through the MBIM interface includes:
Step 731: The MBB device 100 receives, through a control path of the MBB device 100, a CID packet, which is sent by the host 200, of an AT command.
Step 732: The MBB device 100 parses the CID packet of the AT command to acquire the AT command.
Step 733: The MBB device 100 processes the AT command, and generates a processing result of the AT command.
Step 734: The MBB device 100 returns the processing result of the AT command to the host 200 through the control path of the MBB device 100.

FIG. 9 is a flowchart illustrating, from the perspective of an MBB device, a method for sending and receiving an AT command based on an MBIM interface according to another embodiment of the present invention.

When the extended service class includes sending and receiving an AT command, the reporting, according to the service query request, an extended service class supported by the MBB device to the host 200, so that the host 200 exchanges information of an extended service with the MBB device 100 through the MBIM interface includes:
Step 741: Receive, through a data path of the MBB device 100, an AT command packet sent by a host 200, where a format of the AT command packet is customized stream DSS format.
Step 742: Parse the AT command packet to acquire an AT command.
Step 743: Process the AT command and generate a processing result of the AT command.
Step 744: Encapsulate the processing result of the AT command into a DSS packet.
Step 745: Return the DSS packet carrying the processing result of the AT command to the host 200 through the data path of the MBB device 100.

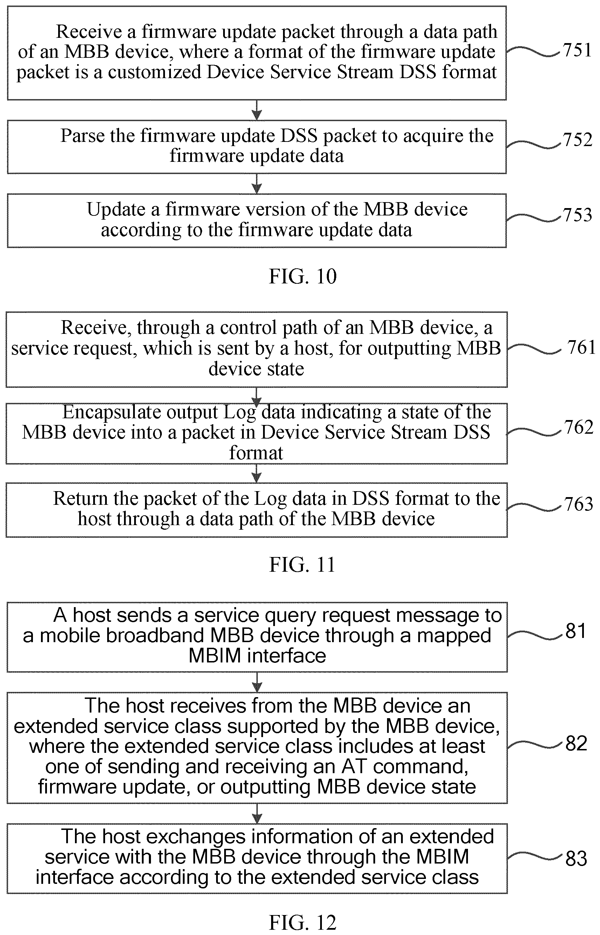

FIG. 10 is a flowchart illustrating, from the perspective of an MBB device, a method for implementing a firmware update based on an MBIM interface according to an embodiment of the present invention.

When the extended service class includes firmware update, the reporting, according to the service query request, an extended service class supported by the MBB device to the host, so that the host exchanges information of an extended service with the MBB device through the MBIM interface includes:
Step 751: Receive the firmware update packet through a data path of the MBB device, where a format of the firmware update packet is Device Service Stream DSS format.
Step 752: Parse the firmware update packet to acquire firmware update data.
Step 753: Update a firmware version of the MBB device according to the firmware update data.

FIG. 11 is a flowchart illustrating, from the perspective of an MBB device, a method for outputting MBB device state based on an MBIM interface according to an embodiment of the present invention.

When the extended service class includes outputting the MBB device state, the reporting, according to the service query request, an extended service class supported by the MBB device 100 to the host 200, so that the host 200 exchanges information of an extended service with the MBB device 100 through the MBIM interface includes:
Step 761: Receive, through a control path of the MBB device 100, a service request, which is sent by a host 200, for outputting the MBB device state.
Step 762: Encapsulate output Log data indicating the MBB device state into a packet in Device Service Stream DSS format.
Step 763: Return the packet carrying the Log data in DSS format to the host through a data path of the MBB device.

It can be understood that, the method for implementing, by an MBB device, communication based on an MBIM interface in this embodiment is implemented according to the foregoing system embodiments. For specific implementation steps, refer to the foregoing system embodiments, and details are not described herein again.

The MBB device 100 for implementing communication based on an MBIM interface in this embodiment of the present invention reports an extended service class supported by the MBB device to the host, so that the host exchanges information of an extended service with the MBB device through the mapped MBIM interface. This helps accomplish subsequent exchange of data of the extended service between the host and the MBB device.

FIG. 12 is a flowchart illustrating, from the perspective of a host, a method for implementing communication based on an MBIM interface according to an embodiment of the present invention. 81: A host 200 sends a service query request message to a mobile broadband MBB device 100 through a mapped MBIM interface.

82: The host 200 receives from the MBB device 100 an extended service class supported by the MBB device, where the extended service class includes at least one of sending and receiving an AT command, firmware update, or outputting MBB device state.

83: The host 200 exchanges information of an extended service with the MBB device 100 through the MBIM interface according to the extended service class.

The host 200 for implementing communication based on the MBIM interface in this embodiment of the present invention receives, through the mapped MBIM interface, the extended service class returned by the MBB device, and performs communication regarding the extended service with the MBB device according to the extended service class, so that the host exchanges data of the extended service with the MBB device.

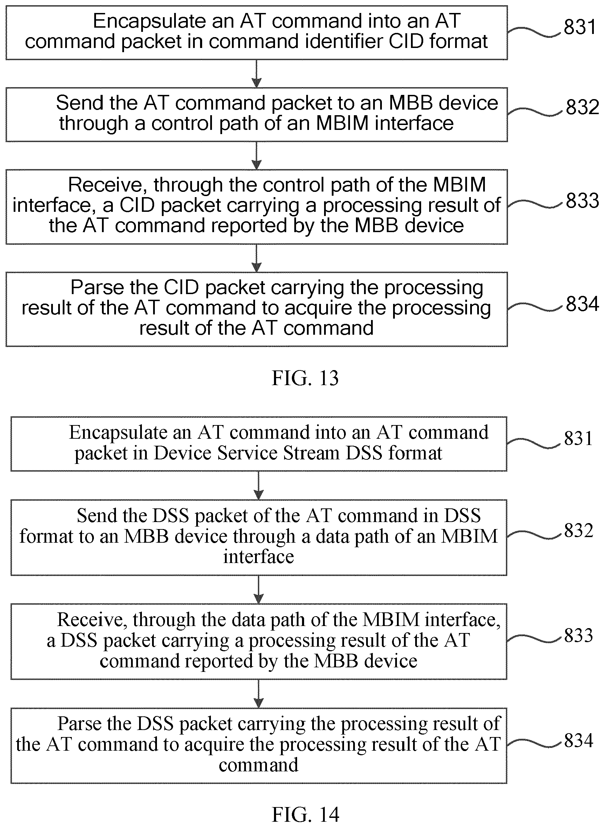

FIG. 13 is a flowchart illustrating, from the perspective of a host, a method for sending and receiving an AT command based on an MBIM interface according to an embodiment of the present invention.

When the extended service class includes sending and receiving an AT command, the exchanging, by the host 200, information of an extended service with the MBB device through the MBIM interface according to the extended service class includes:
831: Encapsulate the AT command into an AT command packet in command identifier CID format.
832: Send the AT command packet to the MBB device through a control path of the MBIM interface.

833: Receive, through the control path of the MBIM interface, a CID packet carrying a processing result of the AT command reported by the MBB device.

834: Parse the CID packet carrying the processing result of the AT command to acquire the processing result of the AT command.

FIG. 14 is a flowchart illustrating, from the perspective of a host, a method for sending and receiving an AT command based on an MBIM interface according to another embodiment of the present invention.

Optionally, when the extended service class includes sending and receiving an AT command, the exchanging, by the host 200, information of an extended service with the MBB device through the MBIM interface according to the extended service class includes:
841: Encapsulate the AT command into an AT command packet in Device Service Stream DSS format.
842: Send the AT command packet in DSS format to the MBB device 100 through a data path of the MBIM interface.
843: Receive, through the data path of the MBIM interface, a DSS packet carrying a processing result of the AT command reported by the MBB device 100.
844: Parse the DSS packet carrying the processing result of the AT command to acquire the processing result of the AT command.

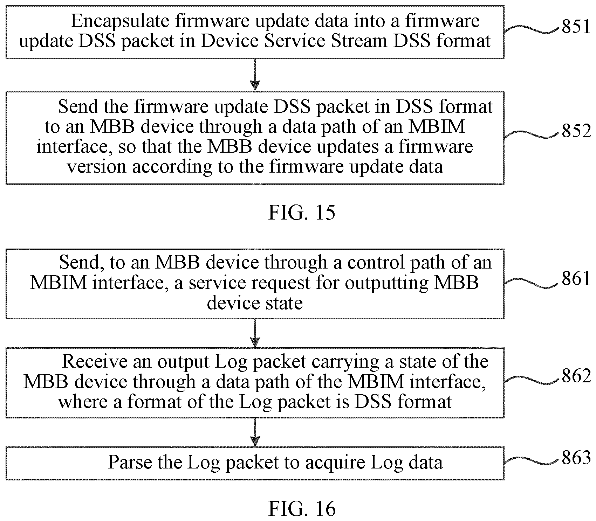

FIG. 15 is a flowchart illustrating, from the perspective of a host, a method for implementing a firmware update based on an MBIM interface according to an embodiment of the present invention. When the extended service class includes firmware update, the exchanging, by the host 200, information of an extended service with the MBB device 100 through the MBIM interface according to the extended service class includes:
851: Encapsulate firmware update data into a firmware update packet in Device Service Stream DSS format.
852: Send the firmware update packet in DSS format to the MBB device 100 through a data path of the MBIM interface, so that the MBB device updates a firmware version according to the firmware update data.

FIG. 16 is a flowchart illustrating, from the perspective of a host, a method for outputting MBB device state based on an MBIM interface according to an embodiment of the present invention.

Optionally, when the extended service class includes outputting MBB device state, the exchanging, by the host 200, information of an extended service with the MBB device 100 through the MBIM interface according to the extended service class includes:
861: Send, to the MBB device 100 through a control path of the MBIM interface, a service request for outputting MBB device state.
862: Receive an output Log packet carrying the MBB device state through a data path of the MBIM interface, where a format of the Log packet is DSS format.
863: Parse the Log packet to acquire Log data.

It can be understood that, before the host 200 receives from the MBB device 100 the extended service class supported by the MBB device, the method includes:
sending, by the host 200 to the MBB device through the control path of the MBIM interface, a service request for enabling the data path, receiving, through the control path of the MBIM interface, a response message indicating that the MBB device has enabled the data path, and transmitting the extended-service data through the data path according to the response message. The data path may be a data path corresponding to the MBIM interface.

It can be understood that, the host 200 may send a service query request message to the mobile broadband MBB device 100 through the control path of the mapped MBIM interface, or may receive, from the MBB device 100 through the control path of the MBIM interface, the extended service class supported by the MBB device.

It can be understood that, the receiving, by the host 200 from the MBB device, an extended service class supported by the MBB device includes: receiving, by the host 200 from the MBB device, a universally unique identifier UUID of the extended service class supported by the MBB device, and identifying, according to the UUID, the extended service class supported by the MBB device; or
receiving a UUID of the extended service class supported by the MBB device and a UUID of a standard service class, so as to identify the extended service class supported by the MBB device and the standard service class.

It can be understood that, the method for implementing, by a host 200, communication based on an MBIM interface in this embodiment is implemented according to the foregoing system embodiments. For specific implementation steps, refer to the foregoing system embodiments, and details are not described herein again.

The host 200 for implementing communication based on an MBIM interface in this embodiment of the present invention receives, through a mapped MBIM interface, an extended service class returned by an MBB device, and performs communication regarding an extended service with the MBB device according to the extended service class, so that the host exchanges data of the extended service with the MBB device.

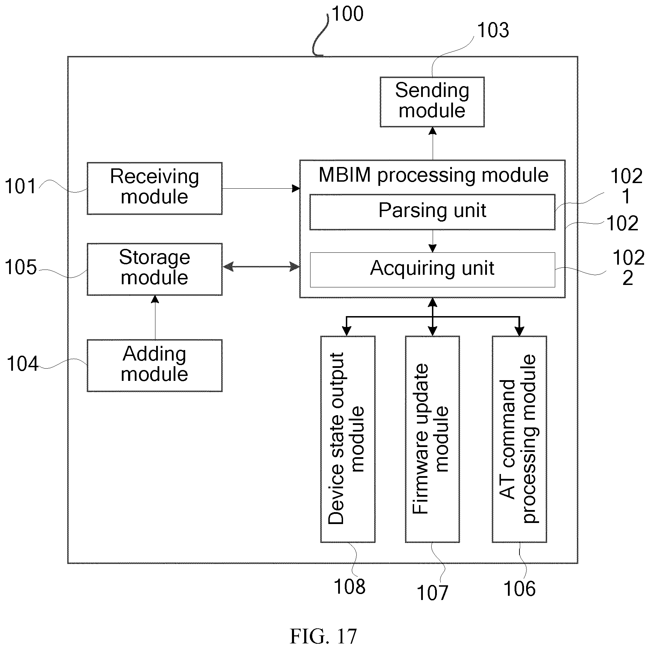

FIG. 17 is a schematic diagram depicting a framework of a mobile broadband MBB device for implementing communication based on an MBIM interface according to an embodiment of the present invention.

The MBB device 100 includes: a receiving module 101, configured to receive a service query request message that is sent by a host 100 through a mapped MBIM interface;
an MBIM processing module 102, configured to parse the service query request message to acquire a service query request; and
a sending module 103, configured to report, according to the service query request, an extended service class supported by the MBB device to the host, so that the host exchanges information of an extended service with the MBB device through the MBIM interface, where the extended service class includes at least one of sending and receiving an AT command, firmware update, or outputting MBB device state.

The MBB device 100 for implementing communication based on an MBIM interface in this embodiment of the present invention reports an extended service class supported by the MBB device to the host 200, so that the host 200 exchanges information of an extended service with the MBB device through the mapped MBIM interface. This helps accomplish subsequent exchange of data of the extended service between the host and the MBB device.

Further or optionally, the MBB device 100 further includes an AT command processing module 106, and when the extended service class includes sending and receiving an AT command,
the receiving module 101 receives, through a control path of the MBB device, an AT command packet sent by the host 100;
the MBIM processing module 102 includes a parsing unit 1021 and an acquiring unit 1022, where the parsing unit 1021 parses the AT command packet into a format that can be identified by the MBB device, and the acquiring unit 1022 acquires an AT command;
the AT command processing module 106 processes the AT command, generates a processing result of the AT command, and sends the processing result to the MBIM processing module, so that the MBIM processing module encapsulates the processing result of the AT command; and
the sending module 103 returns the encapsulated processing result of the AT command to the host 200 through the control path of the MBB device.

Further or optionally, when the extended service class includes sending and receiving an AT command, the receiving module 101 receives, through a data path of the MBB device, an AT command packet sent by the host 200, where a format of the AT command packet is customized stream DSS format;
the MBIM processing module 102 parses the AT command packet to acquire an AT command;
the AT command processing module 106 processes the AT command, and generates a processing result of the AT command;
the MBIM processing module 102 encapsulates the processing result of the AT command into a DSS packet; and
the sending module 103 returns the DSS packet carrying the processing result of the AT command to the host 200 through the data path of the MBB device.

Further or optionally, the MBB device 100 further includes a firmware update module 107, and when the extended service class includes firmware update,
the receiving module 101 receives a firmware update packet through a data path of the MBB device, where a format of the firmware update packet is Device Service Stream DSS format;
the MBIM processing module 102 parses the firmware update DSS packet to acquire firmware update data; and
the firmware update module 107 updates a firmware version of the MBB device according to the firmware update data.

Further or optionally, the MBB device 100 further includes a device state output module 108, and when the extended service class includes outputting MBB device state,
the receiving module 101 receives, through a control path of the MBB device, a service request, which is sent by the host 100, for outputting the MBB device state;
the device state output module 108 outputs Log data indicating a state of the MBB device;
the MBIM processing module 102 encapsulates the Log data into a packet in Device Service Stream DSS format; and
the sending module 103 returns the packet of the Log data in DSS format to the host 100 through the data path of the MBB device.

Optionally, the MBB device 100 further includes an adding module 104 and a storage module 105, where the adding module 104 is configured to add an extended service class defined by the MBB device and a function value corresponding to the extended service class.

The storage module 105 stores an application program of the MBB device 100, extended-service data, and the like.

It can be understood that, the receiving module 101 receives, through the control path of the MBB device, a service query request message that is sent by the host 200 through the mapped MBIM interface. The sending module 103 reports, through the control path of the MBB device, the extended service class supported by the MBB device to the host 200.

It can be understood that, the MBB device 100 in this embodiment of the present invention is described based on the foregoing system embodiments. For a specific implementation process, refer to the foregoing system embodiments.

The MBB device 100 for implementing communication based on an MBIM interface in this embodiment of the present invention reports an extended service class supported by the MBB device to the host 200, so that the host 200 exchanges information of an extended service with the MBB device through the mapped MBIM interface. This helps accomplish subsequent exchange of data of the extended service between the host and the MBB device.

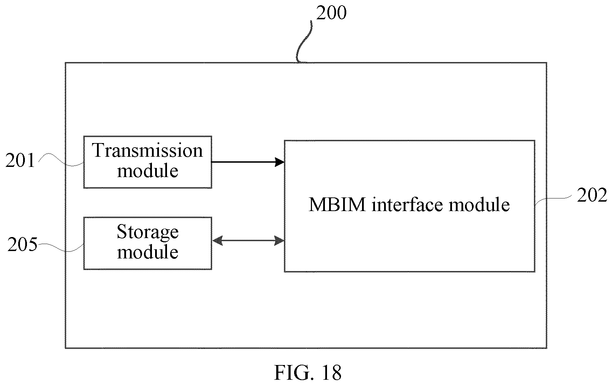

FIG. 18 is a schematic diagram depicting a framework of a host for implementing communication based on an MBIM interface according to an embodiment of the present invention.

The host 200 includes: a transmission module 201, configured to send a service query request message to a mobile broadband MBB device through a mapped MBIM interface, and receive, from the MBB device, an extended service class supported by the MBB device, where the extended service class includes at least one of sending and receiving an AT command, firmware update, or outputting MBB device state; and
a MBIM interface module 202, configured to exchange information of an extended service with the MBB device through the MBIM interface according to the extended service class. The host 200 for implementing communication based on an MBIM interface in this embodiment of the present invention receives, through a mapped MBIM interface, an extended service class returned by an MBB device, and performs communication regarding an extended service with the MBB device according to the extended service class, so that data of the extended service is exchanged between the host and the MBB device.

The MBIM interface module 202 may be further configured to: when the extended service class includes sending and receiving an AT command, encapsulate the AT command into an AT command packet in command identifier CID format, and send the AT command packet through a control path of the MBIM interface; and may further receive, through the control path of the MBIM interface, a CID packet carrying a processing result of the AT command reported by the MBB device; and parse the CID packet carrying the processing result of the AT command to acquire the processing result of the AT command.

Optionally, the MBIM interface module 202 may further encapsulate the AT command into an AT command packet in Device Service Stream DSS format, and send the AT command packet in DSS format to the MBB device through a data path of the MBIM interface; receive, through the data path of the MBIM interface, a DSS packet carrying a processing result of the AT command reported by the MBB device; and parse the DSS packet carrying the processing result of the AT command to acquire the processing result of the AT command.

Optionally, when the extended service class includes firmware update, the MBIM interface module 202 may further encapsulate firmware update data into a firmware update packet in Device Service Stream DSS format; and send the firmware update packet in DSS format to the MBB device through a data path of the MBIM interface, so that the MBB device updates a firmware version according to the firmware update data.

Optionally, when the extended service class is outputting MBB device state, the MBIM interface module 202 may further send, to the MBB device through a control path of the MBIM interface, a service request for outputting the MBB device state; receive an output Log packet carrying the MBB device state through a data path of the MBIM interface, where a format of the Log packet is DSS format; and parse the Log packet to acquire Log data.

It can be understood that, the transmission module 201 may send the service query request message to the MBB device through the control path of the MBIM interface or receive the service query request message through the control path of the MBIM interface, and receive, from the MBB device through the control path of the MBIM interface, the extended service class supported by the MBB device.

The host 200 may further include a storage module 205, configured to store an application program, data of an extended service, and the like.

The host 200 for implementing communication based on an MBIM interface in this embodiment of the present invention receives, through a mapped MBIM interface, an extended service class returned by an MBB device, and performs communication regarding an extended service with the MBB device according to the extended service class, so that data of the extended service is exchanged between the host and the MBB device.

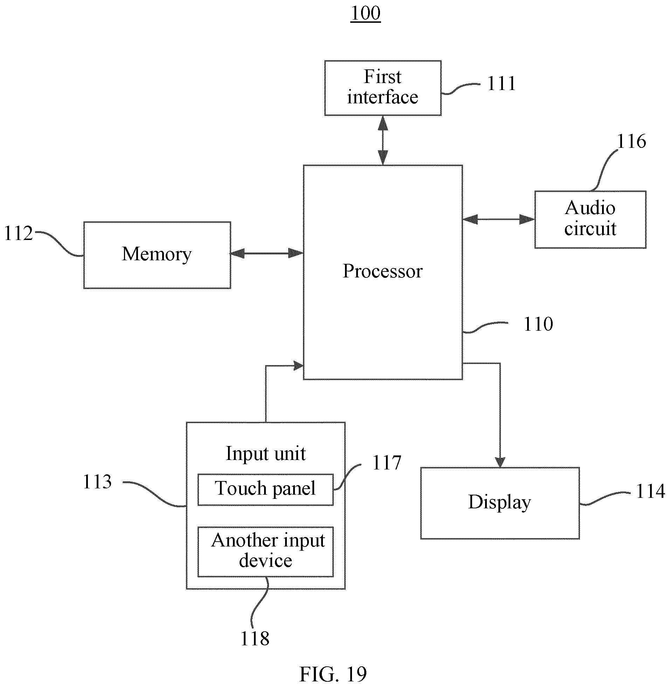

FIG. 19 is a schematic structural diagram of an MBB device for implementing communication based on an MBIM interface according to an embodiment of the present invention.

The MBB device 100 includes a processor 110 and a first interface 111, where one end of the first interface 111 is connected to the processor 110, and the other end of the first interface 111 is used for connection to a host 200;
the first interface 111 receives a service query request message that is sent by the host 200 through a mapped MBIM interface;
the processor 110 parses the service query request message to acquire the service query request; and
an extended service class supported by the MBB device is reported to the host 200 through the first interface 111 according to the service query request, so that the host 200 exchanges information of an extended service with the MBB device 100 through the MBIM interface, where the extended service class includes at least one of sending and receiving an AT command, firmware update, or outputting MBB device state.

The MBB device 100 for implementing communication based on an MBIM interface in this embodiment of the present invention reports an extended service class supported by the MBB device to the host 200, so that the host 200 exchanges information of an extended service with the MBB device through the mapped MBIM interface. This helps accomplish subsequent exchange of data of the extended service between the host and the MBB device.

When the extended service class includes sending and receiving an AT command, the processor 110 is further configured to parse a packet of the AT command to acquire the AT command; and process the AT command, generate a processing result of the AT command, encapsulate the processing result of the AT command, and send the processing result to the host 200 through the first interface.

Specifically, the AT command may be in CID format or DSS format.

Optionally, when the extended service class includes firmware update, the processor 110 parses a firmware update packet sent by the host, to acquire firmware update data; and updates a firmware version of the MBB device according to the firmware update data.

When the extended service class includes outputting MBB device state, the processor 110 receives, through a control path of the first interface 111, a service request, which is sent by the host 200, for outputting MBB device state; encapsulates output Log data indicating a state of the MBB device into a packet in Device Service Stream DSS format; and returns the packet of the Log data in DSS format to the host through a data path of the first interface 111.

It can be understood that, the processor 110 may receive and/or respond to, through the control path of the first interface 111, the service query request sent by the host 200.

Optionally, the processor 107 is further configured to add a customized identifier UUID of an extended service class and/or a function value of an extended service corresponding to the extended service class.

The MBB device 100 may further include a memory 112, an input unit 113, a display 114, an RF circuit 115, an audio circuit 116, and the like, where the memory 112 is configured to store an application program executed by the processor 110 and data of an extended service; the input unit 113 may include a touch panel 117 and another input device 118, for example, a keyboard, or a mouse, and the input unit 113 may receive an operation instruction input by a user, after the processor 110 executes the operation instruction, display an execution result on the display 114, to present it to the user.

It can be understood that, the first interface 111 in this embodiment of the present invention may be a universal serial bus USB interface of the MBB device 100, which is not limited in this embodiment.

Though not shown, the MBB device 100 may further include a camera, a Bluetooth module, and the like, and details are not described herein again.

The MBB device 100 for implementing communication based on an MBIM interface in this embodiment of the present invention reports an extended service class supported by the MBB device to the host 200, so that the host 200 exchanges information of an extended service with the MBB device through the mapped MBIM interface. This helps accomplish subsequent exchange of data of the extended service between the host and the MBB device.

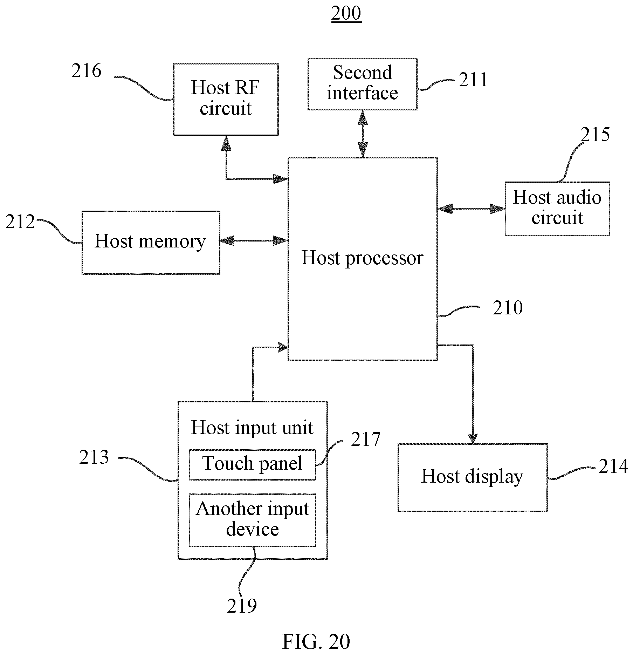

FIG. 20 is a schematic structural diagram of a host for implementing communication based on an MBIM interface according to an embodiment of the present invention.

A host 200 for implementing communication based on an MBIM interface is provided, where the host 200 includes: a host processor 210 and a second interface 211, where one end of the second interface 211 is connected to the host processor 210, the other end of the second interface 211 is connected to a mobile broadband MBB device 100, the host 200 is connected to the MBB device 100, and the second interface is mapped as an MBIM interface;
the host processor 210 sends a service query request message to the MBB device 100 through the mapped MBIM interface, and receives, from the MBB device 100, an extended service class supported by the MBB device, where the extended service class includes at least one of sending and receiving an AT command, firmware update, or outputting MBB device state; and
the host processor 210 exchanges information of an extended service with the MBB device through the MBIM interface according to the extended service class.

The host 200 for implementing communication based on an MBIM interface in this embodiment of the present invention receives, through a mapped MBIM interface, an extended service class returned by an MBB device, and performs communication regarding an extended service with the MBB device according to the extended service class, so that data of the extended service is exchanged between the host and the MBB device.

The host processor 210 may be further configured to: when the extended service class includes sending and receiving an AT command, encapsulate the AT command into an AT command packet in command identifier CID format, and send the AT command packet to the MBB device 100 through a control path of the MBIM interface; receive, through the control path of the MBIM interface, a CID packet carrying a processing result of the AT command reported by the MBB device 100; and parse the CID packet carrying the processing result of the AT command to acquire the processing result of the AT command.

Optionally, when the extended service class includes sending and receiving an AT command, the host processor 210 may further encapsulate the AT command into an AT command packet in Device Service Stream DSS format, and send the AT command packet in DSS format to the MBB device 100 through a data path of the MBIM interface; receive, through the data path of the MBIM interface, a DSS packet carrying a processing result of the AT command reported by the MBB device 100; and parse the DSS packet carrying the processing result of the AT command to acquire the processing result of the AT command.

Optionally, when the extended service class includes firmware update, the host processor 210 may further encapsulate firmware update data into a firmware update packet in Device Service Stream DSS format; and send the firmware update packet in DSS format to the MBB device 100 through a data path of the MBIM interface, so that the MBB device 100 updates a firmware version according to the firmware update data.

Optionally, when the extended service class includes outputting MBB device state, the host processor 210 sends, to the MBB device 100 through a control path of the MBIM interface, a service request for outputting the MBB device state; receives an output Log packet carrying a the MBB device state through a data path of the MBIM interface, where a format of the Log packet is DSS format; and parses the Log packet to acquire Log data.

It can be understood that, the host processor 210 may send the service query request message to the MBB device 100 through the control path of the MBIM interface or receive the service query request message through the control path of the MBIM interface, and receive, from the MBB device through the control path of the MBIM interface, the extended service class supported by the MBB device.

Optionally, the host processor 210 is further configured to add an extended service class defined by the MBB device and an application program corresponding to a function of processing the extended service, and execute the application program.

It can be understood that, the host 100 may further include a host memory 212, a host input unit 213, a host display 214, a host audio circuit 215, a host RF circuit 216, and the like.

The host memory 212 may be configured to store the application program executed by the host processor 210 and data of an extended service; the host input unit 213 may include a touch panel 217 and another input device 219, such as a mouse, and the host input unit 213 may receive an operation instruction input by a user, after the host processor 210 executes the operation instruction, display an execution result on the host display 214, to present it to the user.

The host 200 may further play an audio file by using the host audio circuit 215.

Though not shown, the host 200 may further include a camera, a Bluetooth module, and the like, and details are not described herein again.

It can be understood that, the second interface 211 in this embodiment of the present invention may be a universal serial bus USB interface of the host 200, which is not limited in this embodiment.

The host 200 for implementing communication based on an MBIM interface in this embodiment of the present invention receives, through a mapped MBIM interface, an extended service class returned by an MBB device, and performs communication regarding an extended service with the MBB device according to the extended service class, so that data of the extended service is exchanged between the host and the MBB device.

It should be noted that, in combination with the examples described in the embodiments disclosed in this specification, method steps and modules may be implemented by electronic hardware or a combination of computer software and hardware. The foregoing has generally described steps and compositions of each embodiment according to functions. Whether the functions are performed by hardware or by both software and hardware depends on particular applications and design constraint conditions of the technical solutions. A person of ordinary skill in the art may use different methods to implement the described functions for each particular application, but it should not be considered that the implementation goes beyond the scope of the present invention.

Methods or steps described in the embodiments disclosed in this specification may be implemented by hardware, a software program executed by a processor, or a combination thereof. The software program may reside in a random access memory (RAM), a memory, a read-only memory (ROM), an electrically programmable ROM, an electrically erasable programmable ROM, a register, a hard disk, a removable disk, a CD-ROM, or any other form of storage medium known in the art.

The present invention is described in detail with reference to the accompany drawings and in combination with the exemplary embodiments, but the present invention is not limited thereto.

## Claims

1. A mobile broadband, MBB, device (100) for implementing communication based on an MBIM interface, wherein the MBB device (100) comprises:
a receiving module (101), configured to receive a service query request message that is sent by a host through a mapped MBIM interface;
an MBIM processing module (102), configured to parse the service query request message to acquire a service query request; and
a sending module (103), configured to report, according to the service query request, an extended service class supported by the MBB device to the host, so that the host exchanges information of an extended service with the MBB device through the MBIM interface, **characterized in that** when the extended service class comprises outputting MBB device state;
wherein the MBB device further comprises a device state output module (108),
the receiving module (101) configured to receive, through a control path of the MBB device, a service request, which is sent by the host, for outputting the MBB device state;
the device state output module (108) configured to output Log data indicating the MBB device state;
the MBIM processing module (102) configured to encapsulate the Log data into a packet in Device Service Stream format; and
the sending module (103) configured to return the packet carrying the Log data to the host through a data path of the MBB device.

2. The MBB device according to claim 1, wherein the MBB device further comprises a firmware update module (107), and when the extended service class further comprises a firmware update,
the receiving module (101) configured to receive a firmware update packet through a data path of the MBB device, wherein a format of the firmware update packet is Device Service Stream format;
the MBIM processing module (102) configured to parse the firmware update packet to acquire firmware update data; and
the firmware update module (107) configured to update a firmware version of the MBB device according to the firmware update data.

3. The MBB device according to any one of claims 1 to 2, wherein the receiving module (101) is configured to receive, through a control path of the MBB device, a service query request message that is sent by the host through the mapped MBIM interface; and the sending module (103) is configured to report through the control path of the MBB device, the extended service class supported by the MBB device to the host.

4. A host (200) for implementing communication based on an MBIM interface, wherein the host (200) comprises:
a transmission module (201), configured to send a service query request message to a mobile broadband MBB device through a mapped MBIM interface, and receive from the MBB device an extended service class supported by the MBB device, **characterized in that** when the extended service class comprises outputting MBB device state; and
an MBIM interface module (202), configured to exchange information of an extended service with the MBB device through the MBIM interface according to the extended service class;
the MBIM interface module is configured to send, to the MBB device through a control path of the MBIM interface, a service request for outputting the MBB device state; is furthermore configured to receive an output Log packet carrying Log data indicating the MBB device state through a data path of the MBIM interface, wherein a format of the Log packet is Device Service Stream format; and is furthermore configured to parse the Log packet to acquire the Log data.

5. The host according to claim 4, wherein when the extended service class further comprises sending and receiving an AT command, the MBIM interface module (202) configured to encapsulate the AT command into an AT command packet in Device Service Stream format, and configured to send the AT command packet to the MBB device through a data path of the MBIM interface; furthermore configured to receive through the data path of the MBIM interface, a packet carrying a processing result of the AT command reported by the MBB device; and configured to parse the packet carrying the processing result of the AT command to acquire the processing result of the AT command.

6. The host according to claim 4, wherein when the extended service class further comprises a firmware update, the MBIM interface module (202) configured to encapsulate a firmware update data into a firmware update packet in Device Service Stream format; and configured to send the firmware update packet to the MBB device through a data path of the MBIM interface, so that the MBB device updates a firmware version according to the firmware update data.

7. A method for implementing communication based on a mapped MBIM interface, comprising:
(71) receiving, by a mobile broadband, MBB, device, a service query request message that is sent by a host through the mapped MBIM interface;
(72) parsing, by the MBB device, the service query request message to acquire a service query request; and
(73) reporting, by the MBB device and according to the service query request, an extended service class supported by the MBB device to the host, so that the host exchanges information of an extended service with the MBB device through the mapped MBIM interface, **characterized in that** when the extended service class comprises outputting MBB device state;
receiving, by the MBB device, through a control path of the MBB device, a service request, which is sent by the host, for outputting the MBB device state;
outputting, by the MBB device, Log data indicating the MBB device state;
encapsulating, by the MBB device, the Log data into a packet in Device Service Stream format; and
returning, by the MBB device, the packet carrying the Log data to the host through a data path of the MBB device.

## Patentansprüche

1. Mobilbreitbandgerät bzw. MBB-Gerät (100) zum Implementieren von Kommunikation basierend auf einer MBIM-Schnittstelle, wobei das MBB-Gerät (100) Folgendes umfasst:
ein Empfangsmodul (101), das konfiguriert ist, um eine Dienstabfrageanforderungsnachricht, die durch einen Host über eine zugeordnete MBIM-Schnittstelle gesendet wird, zu empfangen;
ein MBIM-Verarbeitungsmodul (102), das konfiguriert ist, um die Dienstabfrageanforderungsnachricht zum Erfassen einer Dienstabfrageanforderung zu parsen; und
ein Sendemodul (103), das konfiguriert ist, um dem Host eine durch das MBB-Gerät unterstützte Diensterweiterungsklasse gemäß der Dienstabfrageanforderung zu melden, damit der Host Diensterweiterungsinformationen über die MBIM-Schnittstelle mit dem MBB-Gerät austauscht,
**dadurch gekennzeichnet, dass**, wenn die Diensterweiterungsklasse Ausgeben eines MBB-Gerätestatus umfasst;
wobei das MBB-Gerät ferner ein Gerätestatusausgabemodul (108) umfasst,
wobei das Empfangsmodul (101) konfiguriert ist, um eine Dienstanforderung, die durch den Host gesendet wird, zum Ausgeben des MBB-Gerätestatus über einen Steuerpfad des MBB-Geräts zu empfangen;
wobei das Gerätestatusausgabemodul (108) konfiguriert ist, um den MBB-Gerätestatus angebende Log-Daten auszugeben;
wobei das MBIM-Verarbeitungsmodul (102) konfiguriert ist, um die Log-Daten in einem Paket im "Device-Service-Stream"-Format zu verpacken; und
wobei das Sendemodul (103) konfiguriert ist, um das die Log-Daten übermittelnde Paket über einen Datenpfad des MBB-Geräts an den Host zurückzusenden.

2. MBB-Gerät nach Anspruch 1, wobei das MBB-Gerät ferner ein Firmwareaktualisierungsmodul (107) umfasst, und wobei, wenn die Diensterweiterungsklasse ferner eine Firmwareaktualisierung umfasst, das Empfangsmodul (101) konfiguriert ist, um ein Firmwareaktualisierungspaket über einen Datenpfad des MBB-Geräts zu empfangen, wobei ein Format des Firmwareaktualisierungspakets das "Device-Service-Stream"-Format ist;
wobei das MBIM-Verarbeitungsmodul (102) konfiguriert ist, um das Firmwareaktualisierungspaket zum Erfassen von Firmwareaktualisierungsdaten zu parsen; und
wobei das Firmwareaktualisierungsmodul (107) konfiguriert ist, um eine Firmwareversion des MBB-Geräts gemäß den Firmwareaktualisierungsdaten zu aktualisieren.

3. MBB-Gerät nach einem der Ansprüche 1 bis 2, wobei das Empfangsmodul (101) konfiguriert ist, um eine Dienstabfrageanforderungsnachricht, die durch den Host über die zugeordnete MBIM-Schnittstelle gesendet wird, über einen Steuerpfad des MBB-Geräts zu empfangen; und wobei das Sendemodul (103) konfiguriert ist, um dem Host die durch das MBB-Gerät unterstützte Diensterweiterungsklasse über den Steuerpfad des MBB-Geräts zu melden.

4. Host (200) zum Implementieren von Kommunikation basierend auf einer MBIM-Schnittstelle, wobei der Host (200) Folgendes umfasst:
ein Übertragungsmodul (201), das konfiguriert ist, um eine Dienstabfrageanforderungsnachricht über eine zugeordnete MBIM-Schnittstelle an ein Mobilbreitbandgerät bzw. MBB-Gerät zu senden und eine durch das MBB-Gerät unterstützte Diensterweiterungsklasse vom MBB-Gerät zu empfangen, **dadurch gekennzeichnet, dass**, wenn
die Diensterweiterungsklasse Ausgeben eines MBB-Gerätestatus umfasst; und
ein MBIM-Schnittstellenmodul (202), das konfiguriert ist, um Diensterweiterungsinformationen über die MBIM-Schnittstelle gemäß der Diensterweiterungsklasse mit dem MBB-Gerät auszutauschen;
wobei das MBIM-Schnittstellenmodul konfiguriert ist, um eine Dienstanforderung zum Ausgeben des MBB-Gerätestatus über einen Steuerpfad der MBIM-Schnittstelle an das MBB-Gerät zu senden; des Weiteren konfiguriert ist, um ein ausgegebenes Log-Paket, das den MBB-Gerätestatus angebende Log-Daten übermittelt, über einen Datenpfad der MBIM-Schnittstelle zu empfangen, wobei ein Format des Log-Pakets das "Device-Service-Stream"-Format ist; und des Weiteren konfiguriert ist, um das Log-Paket zum Erfassen der Log-Daten zu parsen.

5. Host nach Anspruch 4, wobei das MBIM-Schnittstellenmodul (202), wenn die Diensterweiterungsklasse ferner Senden und Empfangen eines AT-Befehls umfasst, konfiguriert ist, um den AT-Befehl in einem AT-Befehlspaket im "Device-Service-Stream"-Format zu verpacken, und konfiguriert ist, um das AT-Befehlspaket über einen Datenpfad der MBIM-Schnittstelle an das MBB-Gerät zu senden; und des Weiteren konfiguriert ist, um ein Paket, das ein durch das MBB-Gerät gemeldetes Verarbeitungsergebnis des AT-Befehls übermittelt, über den Datenpfad der MBIM-Schnittstelle zu empfangen; und konfiguriert ist, um das Paket, das das Verarbeitungsergebnis des AT-Befehls übermittelt, zum Erfassen des Verarbeitungsergebnisses des AT-Befehls zu parsen.

6. Host nach Anspruch 4, wobei das MBIM-Schnittstellenmodul (202), wenn die Diensterweiterungsklasse ferner eine Firmwareaktualisierung umfasst, konfiguriert ist, um Firmwareaktualisierungsdaten in einem Firmwareaktualisierungspaket im "Device-Service-Stream"-Format zu verpacken; und konfiguriert ist, um das Firmwareaktualisierungspaket über einen Datenpfad der MBIM-Schnittstelle an das MBB-Gerät zu senden, damit das MBB-Gerät eine Firmwareversion gemäß den Firmwareaktualisierungsdaten aktualisiert.

7. Verfahren zum Implementieren von Kommunikation basierend auf einer zugeordneten MBIM-Schnittstelle, das Folgendes umfasst:
(71) Empfangen einer Dienstabfrageanforderungsnachricht, die durch einen Host über die zugeordnete MBIM-Schnittstelle gesendet wird, durch ein Mobilbreitbandgerät bzw. MBB-Gerät;
(72) Parsen der Dienstabfrageanforderungsnachricht zum Erfassen einer Dienstabfrageanforderung durch das MBB-Gerät; und
(73) Melden einer durch das MBB-Gerät unterstützten Diensterweiterungsklasse durch das MBB-Gerät an den Host gemäß der Dienstabfrageanforderung, damit der Host Diensterweiterungsinformationen über die zugeordnete MBIM-Schnittstelle mit dem MBB-Gerät austauscht, **dadurch gekennzeichnet, dass**, wenn die Diensterweiterungsklasse Ausgeben eines MBB-Gerätestatus umfasst;
Empfangen einer Dienstanforderung, die durch den Host gesendet wird, zum Ausgeben des MBB-Gerätestatus durch das MBB-Gerät über einen Steuerpfad des MBB-Geräts;
Ausgeben von den MBB-Gerätestatus angebenden Log-Daten durch das MBB-Gerät; Verpacken der Log-Daten in einem Paket im "Device-Service-Stream"-Format durch das MBB-Gerät; und
Zurücksenden des die Log-Daten übermittelnden Pakets durch das MBB-Gerät an den Host über einen Datenpfad des MBB-Geräts.

## Revendications

1. Dispositif mobile à large bande, MBB (100), permettant de mettre en oeuvre une communication sur la base d'une interface MBIM, le dispositif MBB (100) comprenant :
un module de réception (101), configuré pour recevoir un message de requête de demande de service qui est envoyé par un hôte par l'intermédiaire d'une interface MBIM mappée ;
un module de traitement MBIM (102), configuré pour analyser le message de requête de demande de service pour acquérir une requête de demande de service ; et
un module d'envoi (103), configuré pour transmettre, selon la requête de demande de service, une classe de service étendu prise en charge par le dispositif MBB à l'hôte, afin que l'hôte échange des informations d'un service étendu avec le dispositif MBB par l'intermédiaire de l'interface MBIM,
**caractérisé en ce que** lorsque
la classe de service étendu comprend fournir un état de dispositif MBB ;
le dispositif MBB comportant en outre un module de fourniture d'état de dispositif (108),
le module de réception (101) configuré pour recevoir, par l'intermédiaire d'un chemin de commande du dispositif MBB, une requête de service, qui est envoyée par l'hôte, de fourniture de l'état de dispositif MBB ;
le module de fourniture d'état de dispositif (108) configuré pour fournir des données de journal indiquant l'état de dispositif MBB ;
le module de traitement MBIM (102) configuré pour encapsuler les données de journal dans un paquet dans un format de Flux de Service de Dispositif ; et
le module d'envoi (103) configuré pour retourner le paquet contenant les données de journal à l'hôte par l'intermédiaire d'un chemin de données du dispositif MBB.

2. Dispositif MBB selon la revendication 1, dans lequel le dispositif MBB comprend en outre un module de mise à jour de microprogramme (107), et lorsque la classe de service étendu comprend en outre une mise à jour de microprogramme,
le module de réception (101) configuré pour recevoir un paquet de mise à jour de microprogramme par l'intermédiaire d'un chemin de données du dispositif MBB, un format du paquet de mise à jour de microprogramme étant un format de Flux de Service de Dispositif ;
le module de traitement MBIM (102) configuré pour analyser le paquet de mise à jour de microprogramme pour acquérir des données de mise à jour de microprogramme ; et
le module de mise à jour de microprogramme (107) configuré pour mettre à jour une version de microprogramme du dispositif MBB selon les données de mise à jour de microprogramme.

3. Dispositif MBB selon l'une quelconque des revendications 1 à 2, dans lequel le module de réception (101) est configuré pour recevoir, par l'intermédiaire d'un chemin de commande du dispositif MBB, un message de requête de demande de service qui est envoyé par l'hôte par l'intermédiaire de l'interface MBIM mappée ; et le module d'envoi (103) est configuré pour transmettre par l'intermédiaire du chemin de commande du dispositif MBB, la classe de service étendu prise en charge par le dispositif MBB à l'hôte.

4. Hôte (200) permettant de mettre en oeuvre une communication sur la base d'une interface MBIM, l'hôte (200) comprenant :
un module de transmission (201), configuré pour envoyer un message de requête de demande de service à un dispositif mobile à large bande MBB par l'intermédiaire d'une interface MBIM mappée, et recevoir à partir du dispositif MBB une classe de service étendu prise en charge par le dispositif MBB, **caractérisé en ce que** lorsque la classe de service étendu comprend fournir un état de dispositif MBB ; et
un module d'interface MBIM (202), configuré pour échanger des informations d'un service étendu avec le dispositif MBB par l'intermédiaire de l'interface MBIM selon la classe de service étendu ;
le module d'interface MBIM est configuré pour envoyer, au dispositif MBB par l'intermédiaire d'un chemin de commande de l'interface MBIM, une requête de service de fourniture de l'état de dispositif MBB ; est en outre configuré pour recevoir un paquet de journal de sortie contenant des données de journal indiquant l'état de dispositif MBB par l'intermédiaire d'un chemin de données de l'interface MBIM, un format du paquet de journal étant un format de Flux de Service de Dispositif; et est en outre configuré pour analyser le paquet de journal pour acquérir les données de journal.

5. Hôte selon la revendication 4 dans lequel, lorsque la classe de service étendu comprend en outre envoyer et recevoir une commande AT, le module d'interface MBIM (202) configuré pour encapsuler la commande AT dans un paquet de commande AT dans un format de Flux de Service de Dispositif, et configuré pour envoyer le paquet de commande AT au dispositif MBB par l'intermédiaire d'un chemin de données de l'interface MBIM ; configuré en outre pour recevoir par l'intermédiaire du chemin de données de l'interface MBIM, un paquet contenant un résultat de traitement de la commande AT transmis par le dispositif MBB ; et configuré pour analyser le paquet contenant le résultat de traitement de la commande AT pour acquérir le résultat de traitement de la commande AT.

6. Hôte selon la revendication 4 dans lequel, lorsque la classe de service étendu comprend en outre une mise à jour de microprogramme, le module d'interface MBIM (202) configuré pour encapsuler des données de mise à jour de microprogramme dans un paquet de mise à jour de microprogramme dans un format de Flux de Service de Dispositif ; et configuré pour envoyer le paquet de mise à jour de microprogramme au dispositif MBB par l'intermédiaire d'un chemin de données de l'interface MBIM, afin que le dispositif MBB mette à jour une version de microprogramme selon les données de mise à jour de microprogramme.

7. Procédé permettant de mettre en oeuvre une communication sur la base d'une interface MBIM mappée, comprenant :
(71) recevoir, par un dispositif mobile à large bande, MBB, un message de requête de demande de service qui est envoyé par un hôte par l'intermédiaire de l'interface MBIM mappée ;
(72) analyser, par le dispositif MBB, le message de requête de demande de service pour acquérir une requête de demande de service ; et
(73) transmettre, par le dispositif MBB et selon la requête de demande de service, une classe de service étendu prise en charge par le dispositif MBB à l'hôte, afin que l'hôte échange des informations d'un service étendu avec le dispositif MBB par l'intermédiaire de l'interface MBIM mappée, **caractérisé en ce que** lorsque la classe de service étendu comprend fournir un état de dispositif MBB ;
recevoir, par le dispositif MBB, par l'intermédiaire d'un chemin de commande du dispositif MBB, une requête de service, qui est envoyée par l'hôte, de fourniture de l'état de dispositif MBB ;
fournir, par le dispositif MBB, des données de journal indiquant l'état de dispositif MBB ;
encapsuler, par le dispositif MBB, les données de journal dans un paquet dans un format de Flux de Service de Dispositif ; et
retourner, par le dispositif MBB, le paquet contenant les données de journal à l'hôte par l'intermédiaire d'un chemin de données du dispositif MBB.
